# EUROPEAN PATENT SPECIFICATION

(11) **EP 3 147 186 B1**
(45) Date of publication and mention of the grant of the patent: **26.09.2018**
(21) Application number: 15382467.7
(22) Date of filing: 28.09.2015
(51) Int. Cl.: B62D 57/024, B62D 57/032

(54) **AUTONOMOUS CRAWLING SYSTEM**
AUTONOMES KRIECHSYSTEM
SYSTÈME DE RECHERCHE AUTONOME

(43) Date of publication of application: 29.03.2017
(73) Proprietor: Airbus Defence and Space, S.A.U., 28906 Getafe - Madrid (ES)
(72) Inventor: ESTEBAN FINCK, Fernando Enrique, E-28906 Getafe - Madrid (ES); JURADO GARRIDO, Juan Enrique, E-28906 Getafe - Madrid (ES); LEÓN ARÉVALO, Francisco José, E-28906 Getafe - Madrid (ES); MEMBIELA CABEZA, Alfonso, E-28906 Getafe - Madrid (ES); DE LA CUADRA JIMÉNEZ PLACER, Clemente, E-28906 Getafe - Madrid (ES)
(74) Representative: ABG Patentes, S.L.

(56) References cited:
- US-A- 5 468 099
- US-A1- 2011 243 676
- US-A1- 2012 014 759

## Description

### Technical Field of the Invention

The present invention relates to an autonomous crawling system for crawling on surfaces. It particularly relates to a crawling system for crawling on aeronautical surfaces for performing work on said surfaces.

### Background of the Invention

There are currently different solutions for drilling and riveting aeronautical structures. Most of them involve fixed large-sized installations custom-designed for each specific application and they require complex and expensive equipment. Said installations do not adapt to different surfaces and require installation and configuration, such that their movement to other production zones or areas is unfeasible. Some equipment performs drilling operations, rivet insertion and sealant application using machine vision systems which position the different tools at given work points.

The alternative to these installations can be semiautomatic drilling and subsequent riveting operations, assuring the attachment of the surfaces to be riveted by means of clamps.

There are different attempts to solve the problem of riveting surfaces by means of a device that is versatile and adapts to different surfaces. These systems also use machine vision systems, furthermore being equipment of a considerable span and weight that do not allow use in any aeronautical surface.

Patent document EP 1 884 453 A2 describes a crawler robot equipped with a work unit, and control system for such robot. The technical problem of this solution is that it requires an algorithm that adapts to the surfaces on which it must crawl to achieve perpendicularity between the surface and the actuator at a point of actuation. Obtaining the algorithms, work equipment for obtaining them and the adaptation system of a robot to provide said perpendicularity increase both the weight of the systems as well as their cost.

It is therefore necessary to obtain alternative equipment that provides versatility and manageability as regards the weight and structure thereof.

Document US 2011/0243676 A1 discloses a drilling system for two assemblies on which it is mounted according to the preamble of claim 1. This system makes it possible to drill holes through an overlap area made using a drilling tool passing through a locking orifice formed on a tool holder of the drilling system, the drilling tool comprising a bearing mandrel as well as an expandable ring closely fitting the mandrel along a tapered contact surface and adapted to permit a relative movement along a tapered contact surface.

### General Description of the Invention

The present invention solves the problem indicated above by means of an automaton system according to claim 1. The dependent claims define particular embodiments of the invention. All the features and/or steps of methods described in this specification (including the claims, description and drawings) can be combined in any combination, with the exception of combinations of such mutually excluding features.

In a first aspect of the invention, the present invention relates to an automaton system adapted for moving on a surface, the system comprising
- movement means for moving the automaton system on said surface, and
- actuation means attached to the movement means by means of an adaptation structure, such that the adaptation structure allows the actuation means to act on the surface perpendicular to the tangent of the surface at a point of actuation.

Advantageously, an automaton system according to the invention allows obtaining perpendicularity at a work point without having to use algorithms that calculate the curvature of a surface. In contrast, the adaptation structure is adapted for following the curvature of a known work surface.

In particular embodiments, the automaton system comprises positioning means adapted for adjusting the position of the actuation means, where the positioning means are attached to the movement means through the adaptation structure.

The positioning means, in addition to the movement means, allow a precise adjustment of the point of actuation. In other words, the movement means allow the automaton system to move on a surface, and furthermore, advantageously, once the automaton system has moved the actuation position is specified by means of the positioning means, allowing perpendicular actuation on a specific point through the adaptation structure.

According to the invention, the movement means comprise:
- an outer structure and
- an inner structure internal to the outer structure and attached to it by means of at least one movement arm. These features facilitate having a simple and easy-to-handle autonomous system. Furthermore, this arrangement allows the manufacture thereof with structures that allow adopting different sizes according to actuation needs. The movement arm allows an articulated motion between the two structures which, in several embodiments, in a non-limiting manner, are rectangular, square, or circular.

In particular embodiments, the movement arm comprises a connecting rod-crank mechanism.

In particular embodiments, the movement means comprise a DC motor. Advantageously, these motors allow for savings in weight and size of the motor with respect to AC motors, which allows covering power needs of the autonomous crawling system.

According to the invention, curved rails are mounted on the inner structure, the curved rails having a curvature coinciding with the curvature of the surface on which to act. These rails allow the positioning means to be guided in their motion until reaching the actuation position perpendicular to the surface.

In particular embodiments, the positioning means comprise display means, for example a video camera. This allows controlling the position of the actuation means by means of displaying the point of actuation on an external monitor, for example. In alternative embodiments, the positioning means comprise mark tracing means, for example, by means of a laser that tracks marks or grooves on the surface to determine the correct positioning of the actuation means.

In particular embodiments, the positioning means further comprise a profilometer. Preferably, the profilometer is a contactless-type profilometer, for example a laser, for measuring the topology of the surface to be reproduced in the rail. Advantageously, such profilometers allow reliability, speed, surface adaptability and simplicity, having a small-sized profilometer.

In particular embodiments, the movement means comprise fixing means for fixing to the surface, for example suction cups. Suction cups allow adhesion to the work surface. For example during movement, once the suction cups come into contact with the surface, a vacuum is created and the suction cups are fixed. In the next step, the suction cups are fixed and serve as support.

In particular embodiments, the actuation means comprise a riveter. This embodiment allows using the automaton system as an autonomous riveting system adapted for moving on surfaces, for example aeronautical surfaces.

In particular embodiments, the actuation means comprise a drill. This embodiment allows using the automaton system as an autonomous drilling system adapted for moving on surfaces, for example aeronautical surfaces. By means of the positioning system, the actuation means, in this case drilling means, are positioned on the point to be drilled and work perpendicular to the tangent of the surface at the point of actuation is allowed.

In particular embodiments, the automaton system comprises a set of adaptation structures having different curvatures such that they adapt to different surfaces. In these embodiments, the automaton system is adapted for receiving different adaptation structures according to the surface on which it must move, thereby obtaining a versatile and comfortable-to-use system.

The present invention allows drilling, inserting rivets and, for example, applying a sealant with the corresponding actuation means, in an autonomous and portable manner.

The present invention has the following advantages with respect to the solutions of the state of the art
- it allows autonomously drilling and riveting surfaces with different curvatures,
- it is a moving or portable system,
- it minimizes surface clamping needs because the weight and size of the autonomous crawling system is less than that of other known systems and special positioning of the work surfaces is not required; it allows working locally,
- it prevents fixed installations, preparation needs and high maintenance needs,
- it is a lightweight and easy-to-operate system,
- it is a system that can be configured for different materials and configurations of the structure to be riveted.

### Description of the Drawings

These and other features and advantages of the invention will be more clearly understood based on the following detailed description of a preferred embodiment, given solely by way of illustrative and non-limiting example, in reference to the attached drawings.
Figure 1 shows an example of an automaton system adapted for moving on a surface according to the invention.
Figure 2A shows a perspective view of the movement means of a system according to the invention.
Figure 2B shows a plan view of the movement means of a system according to the invention.
Figure 3 shows the continuous motion sequence in a direction of the movement means of a system according to the invention.
Figure 4 shows a plan view of the inner structure comprising an orthogonal shaft system in a system according to the invention.
Figure 5 shows a drilling and riveting system comprising two autonomous systems working together in tandem.
Figure 6 shows a particular example of the lateral movement system.
Figure 7 shows a particular example of the fine movement system.

### Detailed Description of the Invention

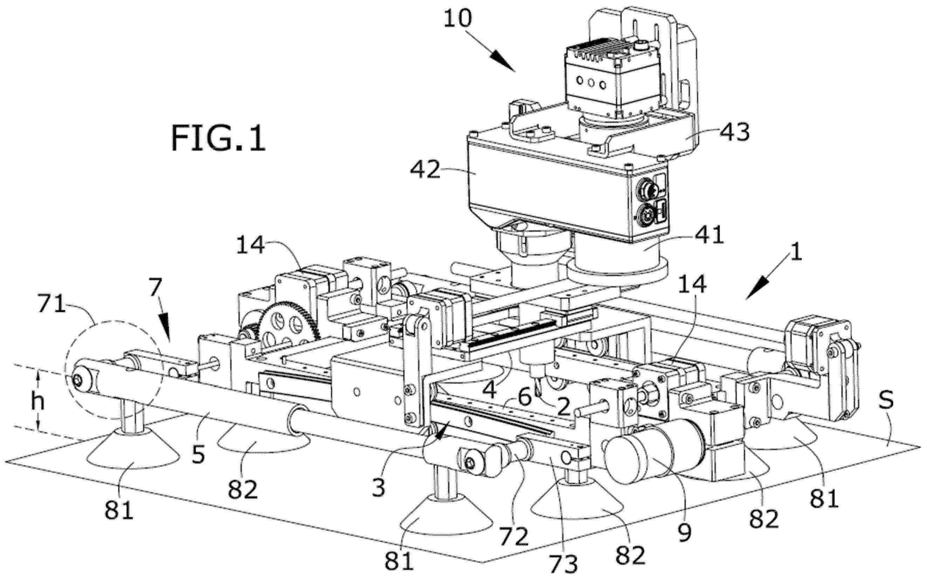

Figure 1 shows an automaton system (10) adapted for moving on a surface (S), the system comprising
- movement means (1) for moving the automaton system on said surface,
- actuation means (2) attached to the movement means (1) adapted for acting on the surface.

The movement means (1) in Figure 1 are adapted for being supported on the surface at a fixed height (h) determined by means of suction cups (81). In the example of the drawing, the actuation means (2) are attached to the movement means (1) by means of an adaptation structure (3). The adaptation structure (3), which in the example comprises two rails having a curvature coinciding with the curvature of the surface (S) on which to act, allows the actuation means (2) to act on the surface (S) perpendicular to the tangent of the surface (S) at a point of actuation (A). Figure 1 furthermore shows a display video camera (41) .

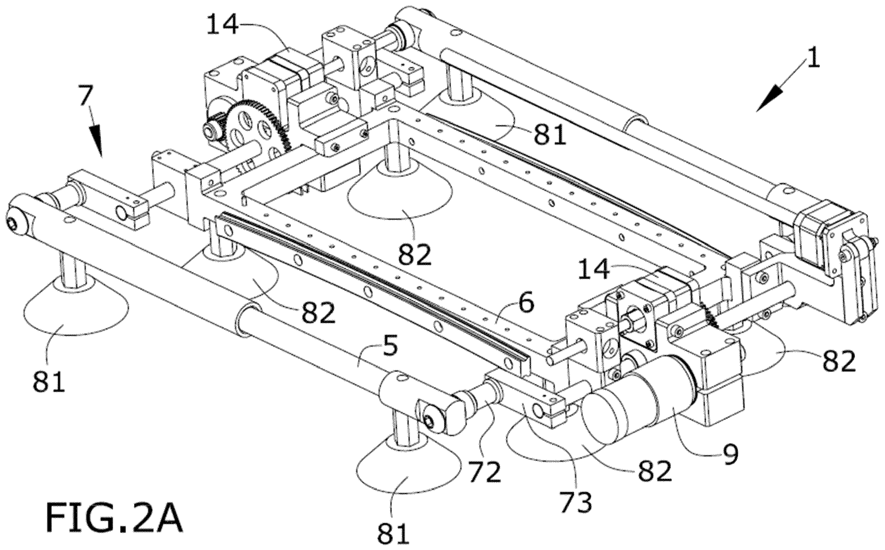

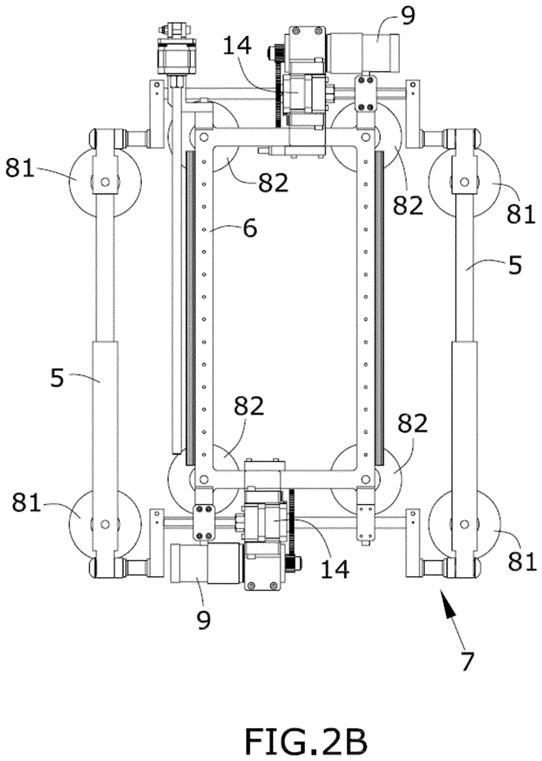

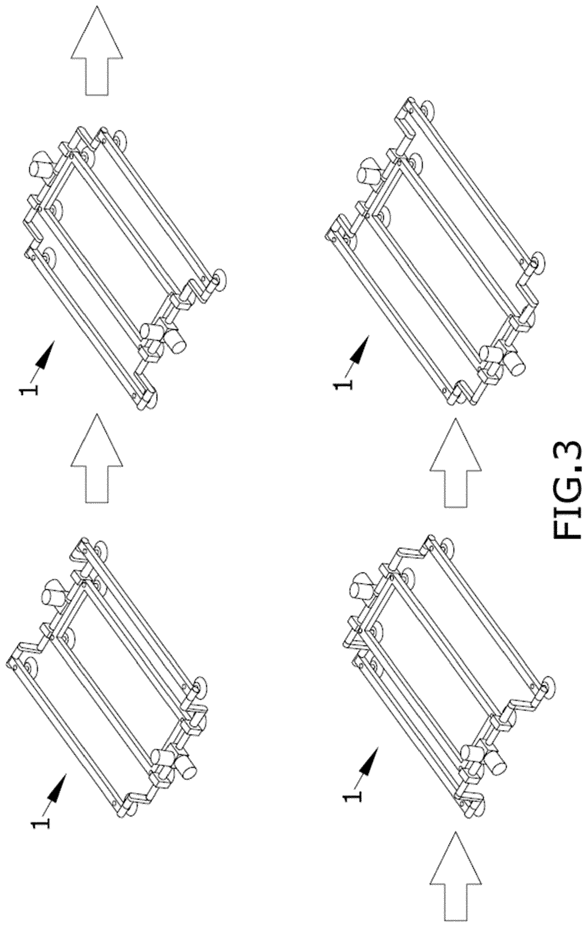

Figures 2A and 2B show two views of the movement means of the example shown. The movement means (1) in this example comprise two structures or frames (5, 6): an outer frame (5) and another inner frame (6), each one respectively comprising 4 suction cups (81, 82) at their ends. The outer frame (5) comprises movement arms (7). In a particular embodiment the movement arm (7) is a connecting rod-crank mechanism (71) that allows movement in one direction. Two DC motors (9) operate the cranks (72) and these in turn move the connecting rods (73). During movement, the suction cups (81, 82) come into contact with the surface (S), the vacuum is created and the suction cups are fixed. In a later step, the suction cups (81) of the connecting rod-crank assembly (71) are fixed and serve to support the automaton system (10). When the cranks (72) which are attached to the inner frame (6) rotate through the shaft of the motor (9), they make the inner frame (6) take one step. When the suction cups (82) come into contact with the surface (S), the vacuum is created and they are fixed to it, so the 8 suction cups (81, 82) fix the assembly to the work surface (S). By repeating the cycle the continuous motion in one direction is achieved, as indicated in Figure 3. Once the suction cups (82) come into contact with the surface (S), they are fixed to same. Another rotation of the motors (9) makes the inner frame (6) move in the forward direction movement, previously cancelling out the vacuum force acting through these suction cups (82).

The connecting rod-crank mechanism (71) allows taking discreet steps and they can optionally be adapted to the work surface (S) by modifying the length of the connecting rod (73) itself. Therefore, when working on a flat surface or with very high radii of curvature -i.e., little curvature-, the length of the connecting rod (73) remains fixed and the motors (9) operating the cranks (72) are synchronized. In particular examples, the autonomous system comprises control software that allows certain desynchronization between the motors (9) such that one rotates somewhat more than the other one does. Advantageously, if the curvature of a surface increases and there are singular points in motion kinematics, this control system allows adapting the suction cups (81) of the connecting rods (73) to the curvature, so modifying the length of the connecting rod (73) is allowed; this prevents the forward movement of the suction cups (81) associated with a shaft of the motor (9) from coinciding with the forward movement of the suction cups (81) associated with the other shaft; if the two motors (9) rotated synchronously, one of the two groups of suction cups would come into contact with the surface without the same occurring with the other group due to the curvature. If the motors were not desynchronized, the following would be possible:
1. some suction cups would come into contact with the work surface while the others would not have done so yet, the motor corresponding to the first rotating ones and "pushing" the suction cup first coming into in contact against the surface itself until the other suction cups also touch the surface and stop both motors, and
2. once the first suction cups come into contact, they would stop the two motors, the other suction cups being located in the air.

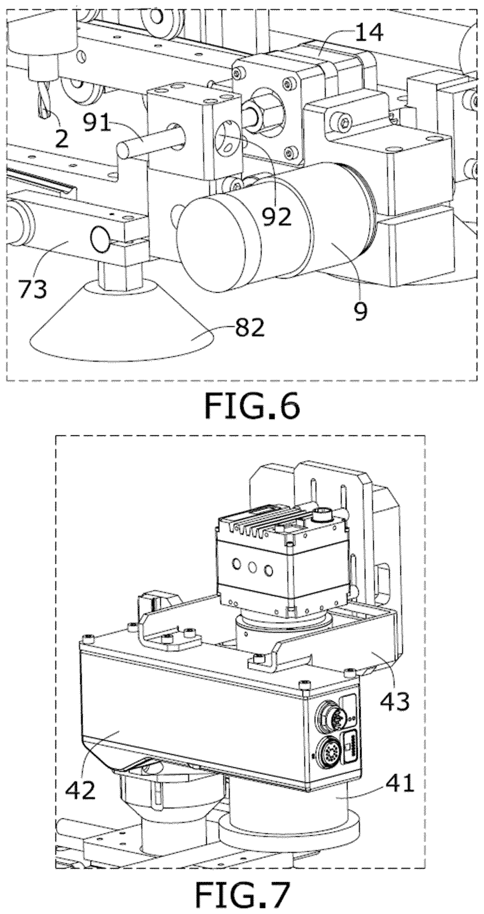

In the example shown in Figures 2A, 2B and 3, the inner structure (6) is a chassis or support structure of the entire assembly and on it there are mounted curved rails that can be disassembled and interchanged. These curved rails allow the sliding of the actuation means (2), which in the example comprises a tool holder head (43) for holding a tool, which can generically be any tool, a machine vision camera and a laser profilometer such as that shown in Figure 7, all with relative positions adjusted for achieving the required functionality.

In particular examples, the automaton system incorporates a spindle system (91), as depicted in Figure 6, which allows the movement in the direction perpendicular to the forward movement direction of the connecting rod-crank mechanism (71) described above. Therefore, by means of the combination of both motions, movement in any direction on the surface is achieved. The lateral movement system is performed with stepper motors (14); the spindle system (91) is connected directly to the corresponding motor (14), the nut (92) being attached to the inner frame (6). The block supporting the lateral movement system slides along one of the sides perpendicular to the main movement direction of the inner frame (6). The suction cups (82) of the inner frame (6) are fixed and when the motor rotates the entire block of the motor (9) moves, including the suction cups (81) of the outer frame (5). When the movement finishes, the outer suction cups (81) are fixed and the start of the motion of the inner frame (6) is allowed.

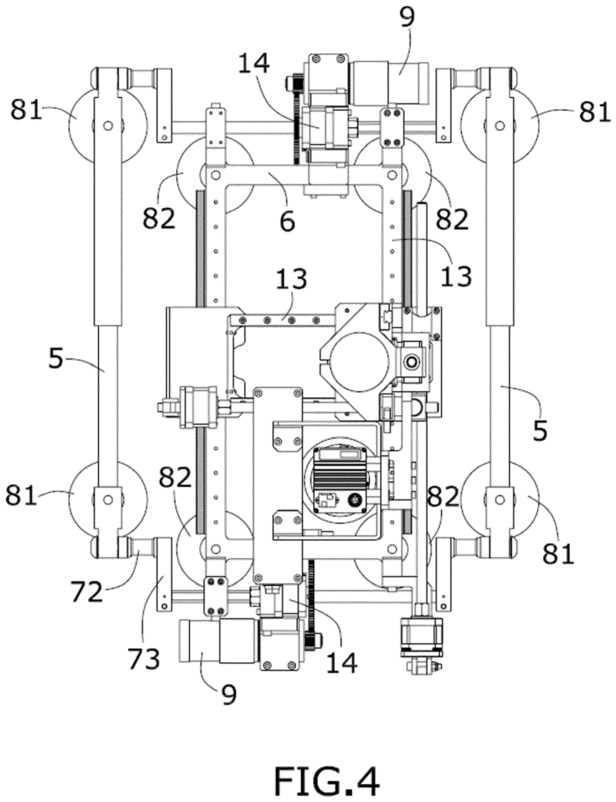

The automaton system (10) comprises positioning means (4) adapted for adjusting the position of the actuation means (2) . In the example shown in Figure 4, the inner structure (6) comprises an orthogonal shaft system (13) on which said positioning means (4) move. Figure 4 shows said shafts (13), which are operated by respective geared motors (not depicted) comprising position coders. The position coders can be position encoders: devices that translate the angular position of a shaft into a digital signal so that the system can perform control.

In particular examples, the system (10) comprises display means, for example a video camera (41). The positioning of the actuation means (2) is performed based on the display means that are positioned locally, references outside the equipment not being necessary.

The display means recognize a work point in previously defined references on surfaces to be joined together, or drilled, and establishes as theoretical set points the points where actuation is required. The positioning means (4) make the necessary corrections and define the coordinates towards which the actuation means (2) must move. Based on the recognition of the references on the surface (S) and of the information about the position of the actuation means (2), a possible microprocessor provides the necessary orders both for the movement of the complete automaton system (10) and of the actuation means (2) in the shaft system (14) of the inner structure (6).

The actuation means (2) optionally comprise sensors (not shown) that assure perpendicularity thereof on the surface and optionally said actuation means (2) are oriented seeking perpendicularity on the work surface (S) based on the information provided by the sensors incorporated in the head.

In particular examples the automaton system comprises a sensor (no shown) at each of the ends of the structures (5, 6). Advantageously these sensors allow implementing a safety system in order to know how many useful suction cups (81, 82) there are at all times, and it determines if the automaton system (10) can continue to work or if it must stop. In one example, the determination of when a suction cup (81, 82) is useful is by means of its vacuum level. By way of example, if one suction cup (81, 82) does not have a vacuum and the rest do, work may continue, but if three suction cups (81, 82) do not have a sufficient vacuum level, work would be stopped.

The automaton system (10) adapts to any radius of curvature of a surface on which it is to move. Therefore, the position of the suction cups (81) determines the minimum radius for which the movement system is adapted. By modifying the position of the suction cups, the adaptation to any radius of curvature is possible, achieving greater versatility without altering the simplicity of the system.

In particular embodiments, the positioning system (4) is assembled on a tool holder head (43). This tool holder head (43) moves on an adaptation structure (3), which in a particular example is a guide system on the positioning system (4); positioning on the work points (A) is performed in two steps: a first approach step with the positioning system (4) and a second "fine" positioning step by moving the tool holder head (43) on the guide system (3). In a particular example depicted in Figure 7, the fine movement system comprises software configured for acting on stepper motors (not shown) moving the tool holder head (43) along the guides. The components of the fine positioning system can be a laser profilometer (42), a display camera (41), and control software and hardware.

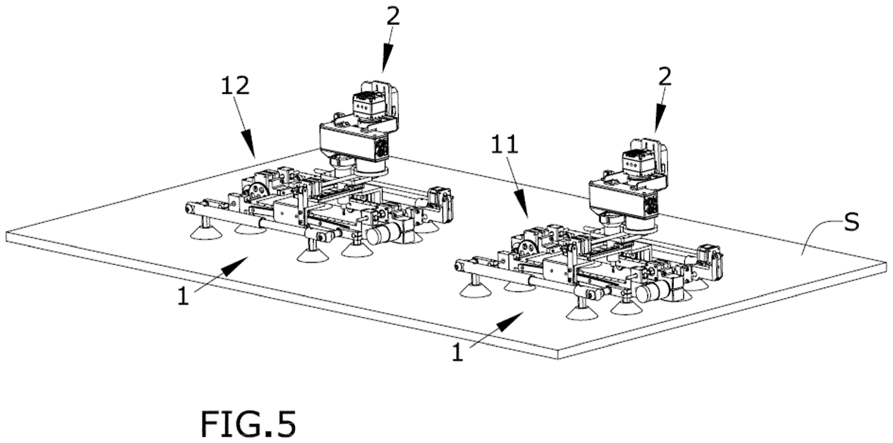

Figure 5 shows a drilling and riveting system comprising two autonomous systems (11, 12) working together in tandem to attach two surfaces (S). The first system (11) is a drilling unit, because the actuation means comprise a drill. The first system (11) drills pre-defined work points in the surfaces (S) to be attached. The first system (11) optionally comprises an self-centering system to assure that the drill is inserted correctly.

The second system (12) inserts rivets and applies sealant in the boreholes made by the first system (11) or the drilling unit (11). Both systems (11, 12) incorporate the same movement means (1), and differ from one another in the actuation means (2). The rivets can optionally be dispensed automatically from connected equipment or they can be dispensed semi-continuously by means of loaders comprised in the second system (12) or riveting unit.

An optional safety system prevents the second system (2) or riveting unit from reaching the first system (11) or drilling unit, assuring that an optimal safety distance that minimizes mechanical fixing needs prior to riveting the surfaces is maintained.

## Claims

1. An automaton system (10) adapted for moving on a surface (S), the system comprising
- movement means (1) for moving the automaton system on said surface (S),
- actuation means (2) attached to the movement means (1) adapted for acting on the surface (S), wherein
- the movement means (1) are adapted for being supported on the surface (S) at a fixed height (h),
- the actuation means (2) are attached to the movement means (1) by means of an adaptation structure (3), such that the adaptation structure (3) allows the actuation means (2) to act on the surface (S) perpendicular to the tangent of the surface (S) at a point of actuation (A),
**characterised by**
- the movement means (1) comprising
an outer structure (5) and
an inner structure (6) internal to the outer structure (5) and attached to the outer structure (5) by means of at least one movement arm (7), wherein curved rails are mounted on the inner structure (6) and wherein said curved rails can be disassembled and interchanged.

2. The automaton system (10) according to claim 1, comprising positioning means (4) adapted for adjusting the position of the actuation means (2), where the positioning means (4) are attached to the movement means (1) through the adaptation structure (3).

3. The automaton system (10) according to any of previous claims, where the movement arm (7) comprises a connecting rod-crank mechanism (71).

4. The automaton system (10) according to one of the preceding claims, where the movement means (1) comprise a motor (9) .

5. The automaton system (10) according to claim 4, where the motor (9) is a DC motor.

6. The automaton system (10) according to claim 2 and to one of claims 3 to 5 when they depend on claim 2, **characterized in that** the positioning means (4) comprise display means.

7. The automaton system (10) according to claim 6, where the display means is a video camera (41).

8. The automaton system (10) according to any of claims 6-7, where the positioning means (4) further comprise a profilometer (42).

9. The automaton system (10) according to any of the preceding claims, where the movement means (1) comprise fixing means for fixing to the surface.

10. The automaton system (10) according to claim 9, where the fixing means are suction cups (81) and (82).

11. The automaton system (10) according to any of previous claims, where the outer structure (5) comprises suction cups (81) and the inner structure (6) comprises suction cups (82).

12. The automaton system (10) according to any of the preceding claims, where the actuation means (3) comprise a riveter (31).

13. The automaton system (10) according to any of the preceding claims, where the actuation means (3) comprise a drill (32) .

14. The automaton system (10) according to claim 2 and to one of claims 3 to 12 when they depend on claim 2, where the positioning means (4) comprise sensors (43) adapted for identifying the end of travel of the positioning system (4) on the movement means.

15. The system comprising
- an automaton system (10) according to any of the preceding claims, and
- a set of adaptation structures (3) having different curvatures such that they adapt to different surfaces.

## Patentansprüche

1. Automatisierungssystem (10), das zur Bewegung auf einer Oberfläche (S) eingerichtet ist, das System aufweisend:
- Bewegungseinrichtungen (1) zur Bewegung des Automatisierungssystems auf dieser Oberfläche (S),
- Betätigungseinrichtungen (2), die an den Bewegungseinrichtungen (1) befestigt und eingerichtet sind, auf die Oberfläche (S) einzuwirken, wobei
- die Bewegungseinrichtungen (1) eingerichtet sind, in einer feststehenden Höhe (h) auf der Oberfläche gestützt zu werden,
- die Betätigungseinrichtungen (2) an den Bewegungseinrichtungen (1) vermittels einer Adaptionsstruktur (3) befestigt sind, so dass es die Adaptionsstruktur (3) den Betätigungseinrichtungen (2) ermöglicht, an einem Betätigungspunkt (A) senkrecht zu der Tangente der Oberfläche (S) auf die Oberfläche (S) einzuwirken,
**dadurch gekennzeichnet, dass**
- die Bewegungseinrichtungen (1) aufweisen:
eine Außenstruktur (5), und
eine Innenstruktur (6), die innerhalb der Außenstruktur (5) ist und an der Außenstruktur (5) vermittels zumindest eines Bewegungsarms (7) angebracht ist, wobei gekrümmte Schienen an der Innenstruktur (6) montiert sind und wobei diese gekrümmten Schienen demontiert und ausgetauscht werden können.

2. Automatisierungssystem (10) nach Anspruch 1, aufweisend Positionierungseinrichtungen (4), die zur Einstellung der Position der Betätigungseinrichtungen (2) eingerichtet sind, wobei die Positionierungseinrichtungen (4) vermittels der Adaptionsstruktur (3) an den Bewegungseinrichtungen (1) angebracht sind.

3. Automatisierungssystem (10) nach einem der vorstehenden Ansprüche, wobei der Bewegungsarm (7) einen Pleuel/Kurbeltrieb (71) aufweist.

4. Automatisierungssystem (10) nach einem der vorstehenden Ansprüche, wobei die Bewegungseinrichtungen (1) einen Motor (9) aufweisen.

5. Automatisierungssystem (10) nach Anspruch 4, wobei der Motor (9) ein Gleichstrom-Motor ist.

6. Automatisierungssystem (10) nach Anspruch 2 und einem der Ansprüche 3 bis 5, wenn diese von Anspruch 2 abhängen, **dadurch gekennzeichnet, dass** die Positionierungseinrichtungen (4) Anzeigeeinrichtungen aufweisen.

7. Automatisierungssystem (10) nach Anspruch 6, wobei die Anzeigeeinrichtung eine Videokamera (41) ist.

8. Automatisierungssystem (10) nach einem der Ansprüche 6 bis 7, wobei die Positionierungseinrichtungen (4) ferner einen Profilmesser (42) aufweisen.

9. Automatisierungssystem (10) nach einem der vorstehenden Ansprüche, wobei die Bewegungseinrichtungen (1) Befestigungseinrichtungen zur Befestigung an der Oberfläche aufweisen.

10. Automatisierungssystem (10) nach Anspruch 9, wobei die Befestigungseinrichtungen Saugnäpfe (81) und (82) sind.

11. Automatisierungssystem (10) nach einem der vorstehenden Ansprüche, wobei die Außenstruktur (5) Saugnäpfe (81) aufweist und die Innenstruktur (6) Saugnäpfe (82) aufweist.

12. Automatisierungssystem (10) nach einem der vorstehenden Ansprüche, wobei die Betätigungseinrichtungen (3) eine Nietvorrichtung (31) aufweisen.

13. Automatisierungssystem (10) nach einem der vorstehenden Ansprüche, wobei die Betätigungseinrichtungen (3) einen Bohrer (32) aufweisen.

14. Automatisierungssystem (10) nach Anspruch 2 und einem der Ansprüche 3 bis 12, wenn diese von Anspruch 2 abhängig sind, wobei die Positionierungseinrichtungen (4) Sensoren (43) aufweisend, die zur Identifizierung des Bewegungsendes des Positionierungssystems (4) an den Bewegungsrichtungen eingerichtet sind.

15. System, aufweisend
- ein Automatisierungssystem (10) nach einem der vorstehenden Ansprüche, und
- eine Reihe von Adaptionsstrukturen (3) mit unterschiedlichen Krümmungen, so dass sich diese an unterschiedliche Oberflächen anpassen.

## Revendications

1. Un système d'automate (10) adapté pour se déplacer sur une surface (S), le système comprenant
- des moyens de déplacement (1) pour déplacer le système d'automate sur ladite surface (S),
- des moyens d'actionnement (2) fixés aux moyens de déplacement (1) adaptés pour agir sur la surface (S),
dans lequel
- les moyens de déplacement (1) sont adaptés à être supportés sur la surface (S) à une hauteur fixe (h),
- les moyens d'actionnement (2) sont fixés aux moyens de déplacement (1) au moyen d'une structure d'adaptation (3), de sorte que la structure d'adaptation (3) permet aux moyens d'actionnement (2) d'agir sur la surface (S) de façon perpendiculaire à la tangente de la surface (S) en un point d'actionnement (A),
**caractérisé en ce que** les moyens de déplacement (1) comprennent
une structure externe (5) et
une structure interne (6) qui est interne à la structure externe (5) et qui est fixée à la structure externe (5) au moyen d'au moins un bras de mouvement (7), des rails incurvés étant montés sur la structure interne (6) et les rails incurvés étant aptes à être démontés et interchangés.

2. Le système d'automate (10) selon la revendication 1, comprenant des moyens de positionnement (4) adaptés pour régler la position des moyens d'actionnement (2), les moyens de positionnement (4) étant fixés aux moyens de déplacement (1) par l'intermédiaire de la structure d'adaptation (3).

3. Le système d'automate (10) selon l'une quelconque des revendications précédentes, dans lequel le bras de mouvement (7) comprend un mécanisme (71) à bielle-manivelle.

4. Le système d'automate (10) selon l'une des revendications précédentes, dans lequel les moyens de déplacement (1) comprennent un moteur (9).

5. Le système d'automate (10) selon la revendication 4, dans lequel le moteur (9) est un moteur à courant continu.

6. Le système d'automate (10) selon la revendication 2 et selon l'une des revendications 3 à 5 lorsqu'elles dépendent de la revendication 2, **caractérisé en ce que** les moyens de positionnement (4) comprennent des moyens d'affichage.

7. Le système d'automate (10) selon la revendication 6, dans lequel le moyen d'affichage est une caméra vidéo (41).

8. Le système d'automate (10) selon l'une quelconque des revendications 6-7, dans lequel les moyens de positionnement (4) comprennent en outre un profilomètre (42).

9. Le système d'automate (10) selon l'une quelconque des revendications précédentes, dans lequel les moyens de déplacement (1) comprennent des moyens de fixation pour une fixation à la surface.

10. Le système d'automate (10) selon la revendication 9, dans lequel les moyens de fixation sont des ventouses (81) et (82).

11. Le système d'automate (10) selon l'une quelconque des revendications précédentes, dans lequel la structure externe (5) comprend des ventouses (81) et la structure interne (6) comprend des ventouses (82).

12. Le système d'automate (10) selon l'une quelconque des revendications précédentes, dans lequel les moyens d'actionnement (3) comprennent une riveteuse (31).

13. Le système d'automate (10) selon l'une quelconque des revendications précédentes, dans lequel les moyens d'actionnement (3) comprennent une perceuse (32).

14. Le système d'automate (10) selon la revendication 2 et selon l'une des revendications 3 à 12 lorsqu'elles dépendent de la revendication 2, dans lequel les moyens de positionnement (4) comprennent des capteurs (43) adaptés pour identifier la fin de course du système de positionnement (4) sur les moyens de déplacement.

15. Le système comprenant
- un système d'automate (10) selon l'une quelconque des revendications précédentes, et
- un ensemble de structures d'adaptation (3) présentant des courbures différentes de sorte qu'elles s'adaptent à des surfaces différentes.
